# EUROPÄISCHE PATENTSCHRIFT

(11) **EP 1 818 588 B1**
(45) Veröffentlichungstag und Bekanntmachung des Hinweises auf die Patenterteilung: **25.03.2009**
(21) Anmeldenummer: 06025810.0
(22) Anmeldetag: 13.12.2006
(51) Int. Cl.: F16L 11/12, F16L 53/00

(54) **Schlauchbaugruppe und Verfahren zu deren Herstellung**
Hose arrangement and its production method
Module de tuyau et sa méthode de production

(30) Priorität: 09.02.2006 DE 102006006211
(43) Veröffentlichungstag der Anmeldung: 15.08.2007
(73) Patentinhaber: REHAU AG + Co, 95111 Rehau (DE)
(72) Erfinder: Freiberger, Sylvia, 95111 Rehau (DE); Schöbel, Michael, 95100 Selb (DE); Görmer, Lutz, 95111 Rehau (DE); Ruckdäschel, Gerhard, 95163 Weißenstadt (DE); Ebert, Richard, 95329 Thurnau (DE); Weber, Michael, 95131 Schwarzenbach/W. (DE)

(56) Entgegenhaltungen:
- EP-A- 1 070 642
- WO-A-02/38426
- WO-A-86/04868
- DE-U1-7202004 018 69
- US-A- 3 632 042
- US-A- 5 522 453

## Beschreibung

Die Erfindung betrifft eine Baugruppe zum Leiten und Temperieren einer Harnstoff-Wasser-Lösung und ein Verfahren zu deren Herstellung.

Die Druckschrift EP-A-1 070 642 offenbart eine Vorrichtung zum Einsatz in Scheibenwaschanlagen von Fahrzeugen zur Beheizung von durch eine Leitung mit einem durch eine Wandung definierten Lumen fließenden Strömungsmedium, mit einem elektrischen Heizleiter, wenigstens einem Anschlußelement, einem Abdichtelement und einem Abdeckelement. Der Heizleiter erstreckt sich frei im Lumen der Leitung und ist gegen die im Lumen der Leitung fließenden Strömungsmedien isoliert. Der Heizleiter ist durch die Anschlusselemente aus dem Lumen der Leitung nach außen geführt und ist elektrisch angeschlossen, wobei das Abdichtelement ein größeres Volumen aufweist, als die kommunizierende Aufnahmeöffnung des Anschlußelementes.

Die Druckschrift US-A-3 632 042 offenbart eine Scheibenwaschanlage zum Waschen einer Windschutzscheibe eines Fahrzeugs.

Bei bestimmten flüssigen oder gasförmigen Medien ist es notwendig, diese bei der Durchleitung durch Schläuche zu temperieren, weil diese Fluide nur in einem bestimmten Temperaturbereich strömungsfähig und chemisch beständig sind.

Ein Beispiel einer derartigen Flüssigkeit stellt eine Harnstoff-Wasser-Lösung nach DIN 70070 und CEFIC (European Chemical Industry Council) Regularien dar, die den Verbrennungsgasen von Dieselmotoren zugegeben wird, um vor allem die Stickoxidemissionen zu senken und damit die gestiegenen Anforderungen der Abgasvorschriften zu erfüllen. Für die Leitung der Harnstoff-Wasser-Lösung aus einem Tank zur Einspritzung in die Verbrennungsgase ist eine Temperierungsmöglichkeit des Schlauchs nötig, weil die Harnstoff-Wasser-Lösung aufgrund der chemischen Zusammensetzung den Nachteil hat, dass sie bei minus 11°C ausflockt/gefriert. Weitere negative Eigenschaften der Harnstoff-Wasser-Lösung bestehen darin, dass sie korrosiv und abhängig von der Temperatur kriechfähig ist.

Auf dem Markt und aus dem Stand der Technik sind Schlauchleitungen bekannt, die einen Heizleiter in der Schlauchwand oder spiralförmig am Umfang entlang der Längsrichtung des Schlauchs angeordnet aufweisen.
Bei diesen Anordnungen wird aber ein Teil der zum Beheizen aufgebrachten Energie an die Umgebung ungenutzt abgegeben. Um die zur Beheizung des Schlauchs notwendige Energie zu senken, geht die Entwicklung hin zu einer Innenbeheizung des Schlauchs.

Weiterhin besteht bei der Verbindung eines innenbeheizten Schlauchs mit einem Konnektor die Schwierigkeit die Leckageverluste an der Verbindungsstelle Schlauch-Konnektor zu reduzieren, und andererseits die Innenbeheizung des Schlauchlumens für die Leitung des Fluids im Anschlussbereich voneinander zu trennen.

Der vorliegenden Erfindung liegt aufgrund des Standes der Technik die Aufgabe zugrunde, eine Baugruppe zum Leiten und Temperien einer Harnstoff-Wasser-Lösung und ein Verfahren zu deren Herstellung anzugeben, die einen Konnektor mit einem fluid-führenden Schlauch mit Innenbeheizung verbindet, wobei die Leckageverluste minimiert werden.

Dabei ist der Konnektor so auszuführen, dass eine Trennung der Innenbeheizung und des Schlauchlumens, in dem die Durchleitung des Fluids, insbesondere einer Harnstoff-Wasser-Lösung, erfolgt, geschaffen wird.

Die Aufgabe wird erfindungsgemäß durch eine Baugruppe nach Anspruch 1 und das Verfahren zur Herstellung der Baugruppe nach Anspruch 16 gelöst.

Durch die Erfindung kann im Gegensatz zu einer Schlauchaußenbeheizung der Gesamtdurchmesser des Schlauchs reduziert werden. Durch die Reduzierung des Gesamtschlauchquerschnitts wird in Fahrzeugen eine bündelartige Schlauch- und/oder Kabelanordnung vorteilhaft erreicht.

Bei der erfindungsgemäßen Baugruppe werden die Leckageverluste durch die stoffschlüssige Verbindung zwischen Konnektor (Anschlussteil) und Schlauch sowie zwischen Konnektor und dem im Inneren des Schlauchs angeordneten Temperierungsmittel reduziert.

Der Konnektor weist mindestens drei Abgänge/Anschlüsse auf. Dabei ist an einem ersten Abgang/Anschluss der Schlauch angebracht, in dessen Inneren sich das Temperierungsmittel befindet. Dieses Mittel wird durch den Konnektor bis zu einem zweiten Abgang/Anschluss, der dem ersten in etwa gegenüberliegt, geführt. Durch eine stoffschlüssige Verbindung des Temperierungsmittels mit dem Konnektor ist der Hohlraum zwischen Temperierungsmittel und Schlauch vom zweiten Abgang/Anschluss getrennt. Ein dritter Abgang/Anschluss des Konnektors kommuniziert mit dem Hohlraum zwischen Temperierungsmittel und Schlauch, so dass das Fluid aus dem Schlauch durch den Konnektor weitergeleitet werden kann. Durch diese Ausführung des Konnektors ist eine Trennung des Temperierungsmittels von dem Hohlraum zwischen Temperierungsmittel und Schlauch an zumindest einem Schlauchende möglich.

Die meisten Fluide besitzen eine untere Grenztemperatur, die nicht unterschritten werden darf, da sonst eine Erstarrung/Ausflockung des Mediums erfolgt und somit keine Durchleitung mehr möglich ist, so dass das im Lumen des Schlauchs angeordnete Temperierungsmittel nur zum Beheizen des geleiteten Mediums dient.

Vorteilhaft hat sich als Temperierungsmittel ein elektrischer Heizleiter gezeigt, der im Lumen des Schlauchs angeordnet ist. Um den elektrischen Heizleiter vor Korrosion durch das geleitete Fluid zu schützen, ist es vorteilhaft, ihn elektrisch zu isolieren, d. h. den elektrischen Heizleiter mit mindestens einer Isolations-/Diffusionssperrschicht zu versehen, wobei das Isolationsmaterial diffusionsdicht und chemisch beständig gegenüber dem zu leitenden Fluid ist.
In diesem Erfindungszusammenhang ist eine mehrfach redundante Ausführung des elektrischen Heizleiters möglich.

Soll durch die Temperierung des Fluids auch eine obere Grenztemperatur nicht überschritten werden, weil z. B. das Fluid ab einer bestimmten Temperatur nicht mehr chemisch beständig ist, dann kann als Temperierungsmittel auch ein Schlauch verwendet werden, in dem ein flüssiges oder gasförmiges Medium gleitet wird.
Die so entstandene Schlauch-in-Schlauch-Anordnung besteht aus dem Schlauch (Außenschlauch) in dem das zu temperierende Fluid geleitet wird und dem Innenschlauch, in dem ein flüssiges oder gasförmiges Medium strömt, wobei die Temperatur des im Innenschlauch geleiteten Mediums so geregelt werden kann, dass die Wärmeübertragung sowohl von dem Temperierungsmittel (Innenschlauch) in den Hohlraum zwischen Temperierungsmittel und Schlauch als auch umgekehrt erfolgen kann.

In diesem Erfindungszusammenhang ist eine Kombination aus Schlauch in Schlauch Anordnung und elektrischem Heizleiter als Temperierungsmittel möglich.

Der elektrische Heizleiter besteht vorteilhaft aus einer Metall-Legierung, wobei diese bevorzugt auch in einer redundanten Auslegung aus der Gruppe Chrom-Nickel-Stähle und/oder Nickel- und/oder Nickel-Kupfer-Legierungen ausgewählt ist. Um bei mehreren elektrischen Heizleitern einen Kurzschluss zu vermeiden, werden diese gegeneinander elektrisch isoliert.

Bei Schlauch-in-Schlauch-Anordnungen kann der Innenschlauch einen mehrschichtigen Aufbau aufweisen, wodurch die unterschiedlichen Schichten eine bessere Sperrschichtwirkung zwischen dem Lumen des Innenschlauchs und dem Lumen des Außenschlauchs gewährleisten; dies insbesondere gegenüber Diffusionsvorgängen des geleiteten Fluids in den Innenschlauch.

Auch der fluid-führende Schlauch, in dem das Temperierungsmittel angeordnet ist, kann mehrschichtig aufgebaut sein. Die Druckbeständigkeit des Schlauchs kann weiterhin durch das Einbringen einer Armierungsschicht, z. B. Vlies-, Gewebe- oder Folieneinlagen, in den mehrschichtigen Schlauchaufbau erhöht werden.

Für die Rückverfolgbarkeit der Baugruppe in Kraftfahrzeugen ist eine wichtige Forderung, eine Kennzeichnung auf dem Schlauch (Innen- und/oder Außenschlauch) durch Aufdrucken und/oder Einprägen auf/in die Oberfläche auf-/einzubringen.

Die Oberfläche des Innen- und/oder Außenschlauchs kann auch farbig oder mehrfarbig gestaltet sein, so dass eine optische Erkennung des Schlauchs und somit eine leichte Zuordnung im Fahrzeug möglich ist. Ein- oder aufgebrachte Muster stellen eine weitere Ausgestaltung der Schlauchoberfläche dar.

Der bevorzugte Nenndruck des Fluids liegt beispielsweise bei 0,6 MPa und die Einsatztemperatur der Baugruppe liegt vorzugsweise in einem Temperaturbereich von minus 35 °C bis plus 100 °C. Die Werkstoffauswahl der Baugruppe wird daher durch das zu leitende Medium und den Einsatztemperaturbereich wesentlich mitbestimmt. Bei der Verwendung der Baugruppe zur Leitung und Temperierung von Harnstoff-Wasser-Lösung ist es daher vorteilhaft, dass der Werkstoff des Konnektors und des Schlauchs und des Temperierungsmittels, aus der Gruppe der Polyamide (PA), insbesondere PA 12 oder PA 12 mit Blends oder PA 6.6 oder PA 11, oder der Polyphenylensulfide (PPS) oder der Polyphthalamide (PPA) oder der Polyetheretherketone (PEEK) oder der Polyetherimide (PEI) ausgewählt ist.
Zur Erhöhung der Festigkeit/Steifigkeit können diesen Polymeren auch Glasfasern und/oder Kohlenstofffasern beigemischt sein.

Um vorteilhaft eine thermische Isolation der Baugruppe von der Umgebung zu erreichen, kann eine Schutzhülle, auch partiell, die bevorzugt aus zwei Halbschalen aufgebaut ist, um die Baugruppe angeordnet werden. Diese thermische Schutzhülle kann aus geschäumten Stoffen, wie z. B. geschäumten Polymeren, insbesondere Polyurethan, geschäumtem Silikonkautschuk oder geschäumten Keramiken und/oder Gläsern sowie aus Glaswolle, Schamottstein, Vermiculiten, oder einem Polymervlies bestehen. Dabei kann die Schutzhülle auch einen mehrschichtigen Aufbau aufweisen, wobei die Oberfläche mit einer metallischen Schicht versehen sein kann, die zusätzlich eine Reflektion der Wärmestrahlung begünstigt. Auch ein lamellenartiger Aufbau aus dünnen Metallfolien und einem geschäumten Werkstoff wirkt sich vorteilhaft auf die Wärmeisolation der Baugruppe aus. Die Schutzhülle kann auch vorteilhafterweise weitere Bauteile, die mit der Baugruppe in Wirkverbindung stehen, thermisch mit isolieren.
In diesem Erfindungszusammenhang ist es auch möglich, den Schlauch (Außenschlauch) durch eine polymere Schaumschicht im Koextrusionsverfahren herzustellen, so dass die Schlauchwand eine thermische Isolation zur Umgebung darstellt.

Besonders vorteilhaft ist das Verbinden des Konnektors mit dem Schlauch und dem Temperierungsmittel durch ein Verfahren nach Anspruch 16.

Dabei wird der Schlauch, in dessen Lumen das Temperierungsmittel z. B. eingeschoben ist, so an zumindest einem Ende in Bezug auf das Temperierungsmittel positioniert, dass das Temperierungsmittel über das Schlauchende übersteht. Dieser Überstand ist vorteilhafterweise so gewählt, dass er größer ist, als der Abstand des ersten und zweiten Abgangs/Anschlusses des Konnektors.
Da bei diesem Verfahren die Verbindung zwischen Konnektor und Schlauch und Konnektor und Temperierungsmittel bei der Herstellung des Konnektors geschaffen wird, ist der Hohlraum zwischen Temperierungsmittel und Schlauch am Schlauchende zu verschließen. Damit wird verhindert, dass beim Anspritzen des Konnektors im Spritzgussverfahren das Material in diesen Hohlraum eindringt und verschließt.

Zum Verschließen des Hohlraums zwischen Temperierungsmittel und Schlauch wird bevorzugt ein Verschlusselement eingesetzt, das über das überstehende Temperierungsmittel bis an den Schlauch geschoben wird, und damit den Hohlraum zwischen Temperierungsmittel und Schlauch verschließt/abdichtet. Dieses Verschlusselement kann auch in diesen Hohlraum etwas hineinragen, wodurch eine bessere Fixierung möglich ist.

Das Verschlusselement kann auch vorteilhafterweise eine Verbindung zwischen Schlauch und Temperierungsmittel sein, wobei der Schlauch formschlüssig mit dem Verschlusselement verbunden ist. Dabei ist das Verschlusselement im Lumen des Schlauchs angeordnet. Durch die Ausgestaltung des Verbindungselements mit einem Hohlraum kann das Fluid durchgeleitet werden. Dieser Hohlraum des Verschlusselements verringert sich auf einer Seite auf den Querschnitt des Temperierungsmittels. Das Temperierungsmittel wird in den Hohlraum des Verschlusselements eingeschoben und reibschlüssig an der Berührungsfläche zwischen Verschlusselement und Temperierungsmittel gehalten.
Damit wird der Hohlraum des Schlauchs am Schlauchende verschlossen. Vorteilhafterweise weist das Verschlusselement eine Öffnung für die spätere Verbindung zwischen Hohlraum des Schlauchs und dem dritten Abgang/Anschluss des Konnektors auf.

Eine alternative Möglichkeit, den Hohlraum des Schlauchs am Schlauchende zu verschließen/abzudichten, besteht darin, dass das Schlauchende thermisch so verformt wird, dass es das Temperierungsmittel berührt. Damit kann auch der Eintritt von Konnektormaterial in den Hohlraum zwischen Temperierungsmittel und Schlauch im Spritzgussprozess verhindert werden.

Im Anschluss an das Verschließen des Hohlraums zwischen Temperierungsmittel und Schlauch an zumindest einem Schlauchende wird dieses Schlauchende in ein Spritzgusswerkzeug eingelegt, wobei sowohl der Überstand des Temperierungsmittels als auch der Schlauch relativ über die Kavität des Werkzeugs hinaus ragt.

Es können auch weitere Bauteile in die Spritzgussform eingelegt werden, die im Spritzgussverfahren mit umspritzt werden. Im danach folgenden Schritt wird das Spritzgusswerkzeug geschlossen und der Vorgang des Anspritzens des Konnektors im Spritzgussverfahren findet statt. Dabei wird der Übergangsbereich zwischen Überstand des Temperierungsmittels und Schlauchende mit polymerem Material, mit Werkstoffen gemäß Anspruch 1 umspritzt.

In diesem Erfindungszusammenhang wurde erkannt, dass durch die Ausbildung von Vorsprüngen und/oder Hinterschnitten am Verschlusselement eine zusätzliche formschlüssige Verbindung zwischen Verschlusselement und Konnektor erreicht wird.

Nach dem Abkühlen des Konnektors im Spritzgusswerkzeug wird die Baugruppe aus dem Spritzgusswerkzeug entnommen. Für die Herstellung der Verbindung zwischen einem dritten Abgang/Anschluss des Konnektors und des Hohlraums zwischen Temperierungsmittel und Schlauch wird ein Durchbruch in den Schlauch und/oder das Verschlusselement im Inneren des Konnektors hergestellt, so dass eine kommunizierende Öffnung zwischen Konnektorabgang/-anschluss und Hohlraum des Schlauchs entsteht. Dies kann vorzugsweise durch Bohren oder Stanzen eines Loches in die Schlauchwandung durch den dritten Abgang/Anschluss des Konnektors erfolgen. Dabei ist darauf zu achten, dass das Temperierungsmittel im Inneren des Schlauchs nicht beschädigt wird. Aus diesem Grund hat es sich als vorteilhaft erwiesen, das Temperierungsmittel im Konnektor nicht in einer mittigen Lage im Schlauch, sondern an der Schlauchwandung zu positionieren.

Bei einer vorgefertigten Öffnung im Verschlusselement ist nach dem Abkühlen des Konnektors die Baugruppe fertig hergestellt.

Bei einer alternativen Lösung zum Einbringen eines Durchbruchs zum Verbinden des Schlauchhohlraums mit dem dritten Abgang/Anschluss des Konnektors wird die Öffnung durch den Schieber des Spritzgusswerkzeugs für den Hohlraum zum Abgang/Anschluss in den Schlauch und/oder das Verschlusselement eingebracht.

Alternativ zum Verbinden des Konnektors bei seiner Herstellung mit dem Schlauch und dem Temperierungsmittel, kann der Konnektor auch als separates Bauteil im Spritzgussverfahren hergestellt werden und im Anschluss daran mit dem Schlauch und dem Temperierungsmittel verbunden werden, wodurch die Baugruppe geschaffen wird.

Bei einem anderen Verfahren, das nicht zur Erfindung gehört, ist zuerst ein Uberstand des emperierungsmittels gegenüber zumindest einem Schlauchende herzustellen. Parallel dazu ist der Konnektor mit mindestens drei Abgängen/Anschlüssen zu fertigen, dessen Abgänge/Anschlüsse durch Hohlräume im Inneren des Konnektors miteinander kommunizieren.

Ein Hohlraum des Konnektors ist so gestaltet, dass der Querschnitt des Hohlraums an einem ersten Abgang/Anschluss des Konnektors an den Schlauchdurchmesser angepasst ist. Dieser Querschnitt verringert sich um die Wandstärke des Schlauchs im Inneren des Konnektors. Danach reduziert sich der Querschnitt des Hohlraums zum - dem ersten Abgang/Anschluss des Konnektors in etwa gegenüberliegenden - zweiten Abgang/Anschluss des Konnektors auf den Querschnitt des im Inneren des Schlauchs angeordneten Temperierungsmittels. Ein dritter Abgang/Anschluss des Konnektors ist mit diesem Hohlraum verbunden, wobei der die Verbindung herstellende weitere Hohlraum in dem Bereich des ersten Hohlraums endet, in dem der Querschnitt kleiner ist als der Querschnitt des Schlauchs.

Auf die Umfangsflächen der Hohlraumbereiche, die entweder an den Schlauch- oder an den Temperierungsmittelquerschnitt angepasst sind, wird in einem weiteren Verfahrensschritt ein Klebstoff aufgebracht. Danach wird der Schlauch mit dem überstehenden Temperierungsmittel in den ersten Abgang/Anschluss des Konnektors eingeführt. Dabei wird das Temperierungsmittel durch den Konnektor bis zum Austreten des Temperierungsmittels durch den zweiten Abgang/Anschluss des Konnektors geführt.
Der Schlauch wird hierbei bis an die erste Querschnittsreduzierung des Hohlraums im Konnektor eingeschoben, so dass der mit dem dritten Abgang/Anschluss des Konnektors in Verbindung stehende Hohlraum nicht verschlossen wird.

Nach dem Aushärten des Klebstoffs ist eine stoffschlüssige Verbindung zwischen Konnektor und Schlauch und zwischen Konnektor und Temperierungsmittel hergestellt.

Bei diesem Verfahren ist es auch denkbar, dass zuerst der Konnektor mit dem Schlauch verbunden wird und im Anschluss daran das Temperierungsmittel durch den Konnektor in den Schlauch eingebracht wird.

Der Klebstoff kann auch nach dem Einbringen des Temperierungsmittels und des Schlauchs an dem Konnektor am Umfang des Temperierungsmittels und des Schlauchs aufgebracht werden, so dass der Klebstoff in den Spalt zwischen Temperierungsmittel und Konnektor und zwischen Schlauch und Konnektor aufgrund seiner Viskosität kriecht und danach aushärtet.

Bei dieser Anordnung kommt der aufgebrachte Klebstoff mit dem Fluid im Einsatzfall in Berührung. Aus diesem Grund muss der Klebstoff chemisch beständig gegenüber dem Fluid ausgelegt sein.

Um dies zu umgehen, können in den Hohlraumbereichen des Konnektors, die entweder an den Schlauch- oder an den Temperierungsmittelquerschnitt angepasst sind, Dichtmittel, wie beispielsweise O-Ringe, Dichtringe oder dergleichen, angeordnet sein. Damit wird eine Trennung zwischen Fluid und Klebstoff geschaffen, so dass nur diese Dichtmittel chemisch beständig gegenüber dem Fluid ausgeführt sein müssen.

Die beschriebene Baugruppe kann auch durch weitere Verfahren, bei denen der Konnektor ebenfalls als separates Bauteil vorliegt, geschaffen werden.

Dazu wird der Konnektor mit dem Schlauch und mit dem im Inneren des Schlauchs angeordneten Temperierungsmittel im Laserschweißverfahren verbunden. Dabei wird der Überlappungsbereich, der nach dem Einführen des Schlauchs und des Temperierungsmittels in den Konnektor zwischen Konnektor und Schlauch und Temperierungsmittel entsteht, der Laserstrahlung ausgesetzt. Vorteilhafterweise wird der Konnektor aus einem für die Wellenlänge der eingesetzten Laserstrahlung transparentem Material hergestellt. Somit wird erreicht, dass die Strahlung nicht durch den Konnektor absorbiert wird. Der Schlauch und das Temperierungsmittel absorbieren hingegen die eingebrachte Strahlungsenergie, so dass sich der Schlauch und das Temperierungsmittel im Strahlungsbereich erwärmen und aufschmelzen. Durch die Wärmeübertragung im Überlappungsbereich schmilzt auch das Konnektormaterial auf und im folgenden Abkühlprozess entsteht in dem aufgeschmolzenen Bereich eine stoffschlüssige Verbindung zwischen Schlauch und Temperierungsmittel mit dem Konnektor. Ein Beispiel für eine laserverschweißbare Materialkombination ist laserschweißbares Polyamid 12 mit einem Glasfaseranteil von ca. 20-30 Vol. % für den Konnektor sowie laserschweißbares Polyamid 12 unter Zugabe von Ruß oder einem anderen dafür geeigneten strahlungsabsorbierenden Stoff für den Schlauch.

Beispielsweise kann auch eine Strahlungsquelle, die nicht kohärente Strahlung emittiert, verwendet werden. Vorzugsweise weist die emittierte Strahlung eine spektrale Strahlungsleistungsverteilung auf, deren Maximum bei einer Wellenlänge im Infrarotbereich liegt. Damit ist eine wirkungsvolle Übertragung der Wärme in den Schlauch und das Temperierungsmittel möglich. Der Schlauch und das Temperierungsmittel kann durch Zugabe von Farbpigmenten, die zusätzlich als Absorptionszentren in der Polymermatrix wirken, strahlungsabsorbierend ausgebildet werden.

In diesem Zusammenhang ist es auch denkbar, dass bei Verwendung eines elektrischen Heizleiters dieser nur auf einer Seite des Schlauchs elektrisch angeschlossen ist, da der Heizleiter als Schlaufe im Schlauch oder Innenschlauch bei einer Schlauch in Schlauch Anordnung verlegt ist. Damit kann der zweite Abgang/Anschluss eines Konnektors entfallen.

Die Erfindung wird anhand der Ausführungsbeispiele beschrieben.

Es zeigt:
- Figur 1 -: Schnitt durch eine erfindungsgemäße Baugruppe mit Verschlusselement
- Figur 2 -: Schnitt durch eine erfindungsgemäße Baugruppe mit außermittigem Heizleiter
- Figur 3 -: Schnitt durch eine erfindungsgemäße Baugruppe mit thermisch verformtem Schlauch
- Figur 4 -: Schnitt durch einen Konnektor mit O-Ring
- Figur 5 -: Schnitt durch einen mit dem Schlauch und dem Temperierungsmittel laserverschweißten Konnektor.

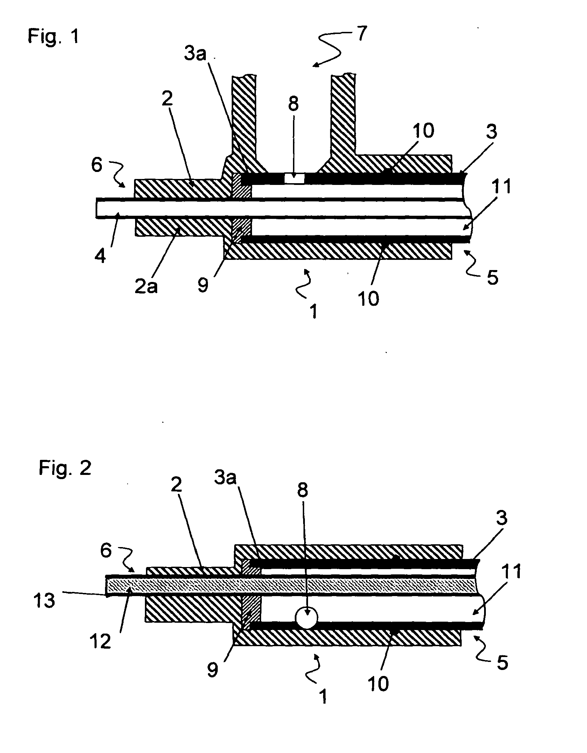

In Figur 1 ist ein Schnitt durch eine erfindungsgemäße Baugruppe 1 mit Verschlusselement 9 dargestellt. Bei dieser Ausführungsform ist der Hohlraum 11 zwischen Temperierungsmittel 4 und Schlauch 3 durch ein Verschlusselement 9 verschlossen. Dieses Verschlusselement 9 reicht in den Hohlraum 11 hinein, so dass das Temperierungsmittel 4 in Bezug auf den Schlauch 3 am Ende des Schlauchs 3 positioniert wird.
Das Verschlusselement 9 hat keine Dichtwirkung in Bezug auf das im Hohlraum 11 zwischen Temperierungsmittel 4 und Schlauch 3 geleitete Fluid, sondern dient lediglich beim Anspritzen des Konnektors 2 im Spritzgussverfahren dazu, dass kein Konnektormaterial in den Hohlraum 11 zwischen Temperierungsmittel 4 und Schlauch 3 am Schlauchende 3a eintreten kann.

Die Dichtwirkung wird durch das Umspritzen des Übergangs zwischen Temperierungsmittel 4 und Schlauch 3 erreicht.
Die Verbindung zwischen dem Hohlraum 11 und dem dritten Abgang/Anschluss 7 des Konnektors ist durch einen Durchbruch 8 hergestellt. Damit kann das Fluid aus dem Hohlraum 11 ungehindert durch die Öffnung 8 und den dritten Abgang/Anschluss 7 des Konnektors geleitet werden.
Das Temperierungsmittel 4 ist in diesem Beispiel als Schlauch ausgebildet, in dessen Lumen ein Fluid strömt.
Um beim Anspritzen des Konnektors 2 im Spritzgussverfahren eine bessere Verbindung zwischen Schlauch 3 und Konnektor 2 zu erreichen, ist in diesem Beispiel der Schlauch 3 angestaucht, so dass eine Wulst 10 entsteht. Diese stellt eine formschlüssige Verbindung zwischen Konnektor 2 und Schlauch 3 her. Ein Anstauchen ist auch bei dem Temperierungsmittel 4 im Bereich 2a der Verbindungsstelle zwischen Konnektor 2 und dem Temperierungsmittel möglich, wenn das Temperierungsmittel als Schlauch ausgebildet ist.
Durch diese zusätzliche formschlüssige Verbindung zwischen Konnektor 2 und Schlauch 3 durch eine Wulst 10 erhöht sich die Scherfestigkeit der Verbindungsstelle.
Die Ausgestaltung des dritten Abgangs/Anschlusses 7 des Konnektors kann je nach Einsatzfall angepasst werden. In diesem Bereich können auch weitere Teile beim Spritzgussvorgang mit umspritzt werden.
Es ist auch denkbar, dass weitere Abgänge/Anschlüsse mit dem Hohlraum 11 zwischen Temperierungsmittel 4 und Schlauch 3 vorhanden sind, so dass ein Abzweig entsteht. Auch kann der Winkel, den der dritte Abgang/Anschluss 7 des Konnektors mit dem ersten und/oder zweiten Abgang/Anschluss 5, 6 einschließt, variieren.
Besonders günstig für die Herstellung des Durchbruchs 8 ist es, wenn der dritte Abgang/Anschluss 7 senkrecht zu den beiden anderen Abgängen/Anschlüssen 5, 6 angeordnet ist.

In Figur 2 ist ein Schnitt durch eine erfindungsgemäße Baugruppe 1 mit einem außermittig angeordnetem Temperierungsmittel, das als elektrischer Heizleiter 12 ausgebildet ist, dargestellt.
Um eine Korrosion des Heizleiters 12 zu vermeiden, weist er eine Isolationsschicht 13 auf, die als Außenummantelung des elektrischen Heizleiters 12 diffusionsdicht und beständig gegenüber dem geleiteten Fluid ist. In diesem Beispiel ist der Heizleiter 12 nicht mittig im Schlauch 3 angeordnet, wodurch im Bereich des Durchbruchs 8 ein größerer Abstand zwischen Schlauchinnenwandung und Temperierungsmittel 4 entsteht.

Damit wird die Gefahr einer Beschädigung beim Einbringen des Durchbruchs 8 in den Schlauch 3 verringert. Das Temperierungsmittel 4 wird durch das Verschlusselement 9 in diese außermittige Lage gebracht, so dass die Lage des elektrischen Heizdrahtes 12 am Ende des Schlauchs 3 definiert ist.
Auch in diesem Beispiel ist der Schlauch 3 angestaucht, so dass eine formschlüssige Verbindung zwischen Schlauch 3 und Konnektor 2 entsteht, die die stoffschlüssige Verbindung beim Anspritzen des Konnektors 2 im Spritzgussverfahren unterstützt.

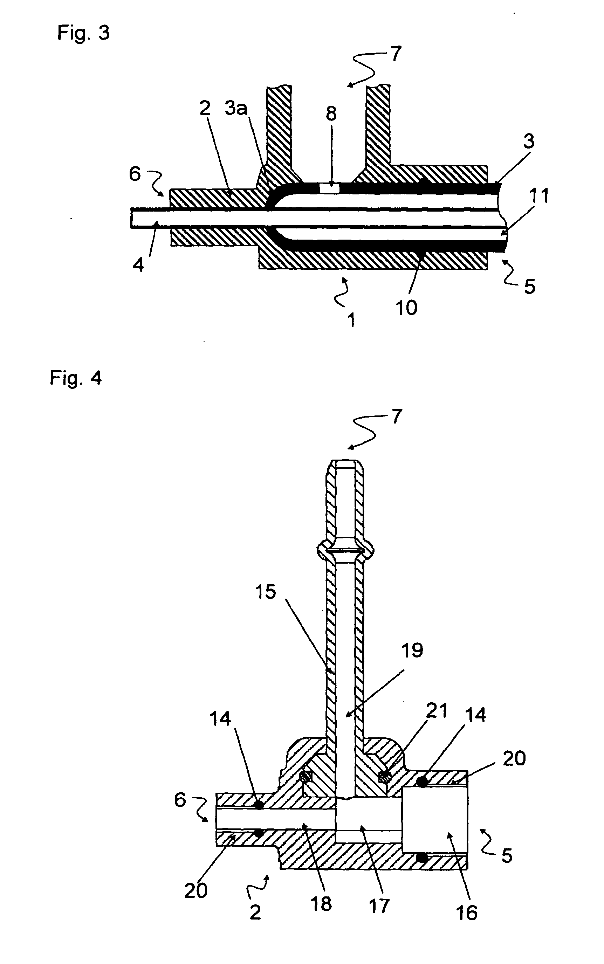

In Figur 3 ist ein Schnitt durch eine erfindungsgemäße Baugruppe 1 mit einem thermisch verformten Schlauch 3 dargestellt. Bei diesem Ausführungsbeispiel ist das Schlauchende 3a nicht durch ein Verschlusselement 9, sondern durch das thermisch verformte Schlauchende 3a verschlossen.
Durch das thermische Verformen des Schlauchendes 3a berührt der Schlauch 3 das in seinem Inneren angeordnete Temperierungsmittel 4. Damit wird der Hohlraum 11 zwischen Temperierungsmittel 4 und Schlauch 3 am Schlauchende 3a abgeschlossen, so dass beim Umspritzen kein oder nur sehr wenig Konnektormaterial in diesen Hohlraum 11 eindringen kann. Damit wird gewährleistet, dass beim Einbringen des Durchbruchs 8 eine Verbindung zum Hohlraum 11 geschaffen werden kann.

In Figur 4 ist ein Konnektor 2 dargestellt, der mit einem Schlauch 3 verbunden werden kann.
Der Konnektor 2 weist drei Abgänge/Anschlüsse 5, 6, 7 auf. Diese kommunizieren über die Hohlräume 16, 17, 18, 19, im Inneren des Konnektors 2 miteinander. Bei der Herstellung des Konnektors 2 ist ein Bauteil 15 in die Spritzgussform eingelegt, so dass dieses formschlüssig mit dem Konnektor 2 verbunden wird. Zum Abdichten der Berührungsflächen zwischen Konnektor 2 und Bauteil 15 ist ein Dichtmittel 21, vorzugsweise ein O-Ring, ebenfalls mit eingespritzt.
Durch das eingebrachte Bauteil 15 kann die Baugruppe an z. B. eine Düse oder einen Vorratstank/-behälter angeschlossen werden.
Der Hohlraum 16 eines Abgangs/Anschlusses 5 des Konnektors 2 ist im Querschnitt an den damit zu verbindenden Schlauch 3 (nicht weiter dargestellt) angepasst. Um diesen Schlauch 3 im Konnektor 2 zu positionieren, verringert sich der Querschnitt am Übergang von diesem Hohlraum 16 zu einem anschließenden Hohlraum 17. Diese Reduzierung stimmt in etwa mit der Wandstärke des Schlauchs 3 überein, so dass das im Schlauch 3 geleitete Fluid ungehindert durchströmen kann.

Dieser zweite Hohlraum 17 kommuniziert mit dem Hohlraum 19 im Bauteil 15 mit einem weiteren Abgang/Anschluss 7 des Konnektors 2.
Um das Temperierungsmittel 4, 12, das im Inneren des Schlauchs 3 angeordnet ist, nach außen zu führen, schließt sich an den mittleren Hohlraum 17 des Konnektors 2 ein weiterer Hohlraum 18 an, der im Querschnitt an das Temperierungsmittel 4,12 (nicht weiter dargestellt) angepasst ist.
Dieser Konnektor ist so aufgebaut, dass in den Umfangsbereichen 20 der Hohlräume 16, 18, die an die Querschnitte des Schlauchs 3 und des Temperierungsmittels 4, 12 angepasst sind, ein Klebstoff aufgebracht werden kann. Der Klebstoff kann vor dem Einführen des Schlauchs 3 und des Temperierungsmittels 4, 12 aufgebracht werden. Es ist aber auch möglich, den Klebstoff nach dem Einbringen des Temperierungsmittels 4, 12 und des Schlauchs 3 aufzubringen, da er aufgrund seines Kriechverhaltens in diese Umfangsbereiche 20 der Hohlräume 16, 18 eindringt.
Es hat sich als vorteilhaft erwiesen, in die Hohlräume 16, 18 des Konnektors 2, die an die Querschnitte des Schlauchs 3 und des Temperierungsmittels 4, 12 angepasst sind, Dichtmittel 14, wie beispielsweise einen O-Ring, einzubringen, die gegenüber dem Fluid beständig sind. Damit wird erreicht, dass der verwendete Klebstoff nicht unmittelbar mit dem Fluid in Berührung kommt, so dass der Klebstoff nicht chemisch beständig gegenüber dem Fluid ausgeführt sein muss.

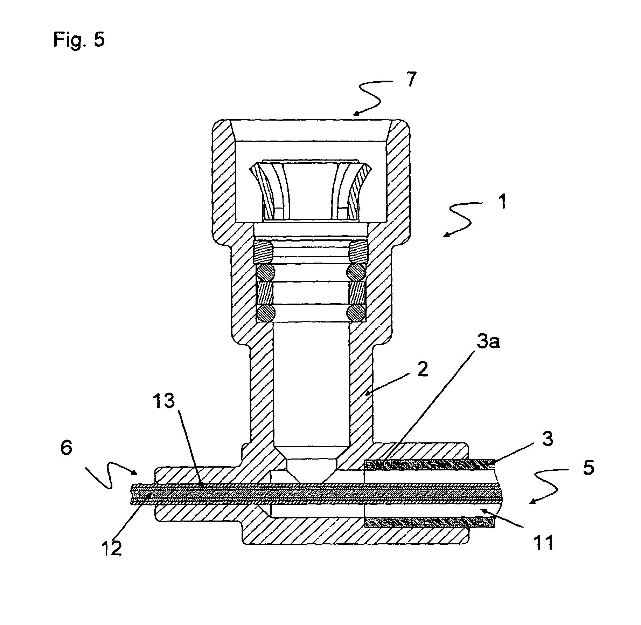

In Figur 5 ist eine erfindungsgemäße Baugruppe 1 dargestellt. Bei dieser sind die verwendeten Werkstoffe auf die Leitung und Temperierung einer Harnstoff-Wasser-Lösung abgestimmt. Dabei ist der Konnektor 2, der Schlauch 3 und die Isolationsschicht 13 des mit dem Fluid in Berührung kommenden elektrischen Heizleiters 12 aus einem Polyamid 12 hergestellt. Dieser Werkstoff ist diffusionsdicht und zeigt eine gute chemische Beständigkeit gegenüber der Harnstoff-Wasser-Lösung. Die Isolationsschicht 13 des Temperierungsmittels 4 besteht in diesem Ausführungsbeispiel aus zwei Schichten, wobei die äußere Schicht aus einem Polyamid 12 und die innere aus einem Polytetrafluorethylen besteht. Der Konnektor 2 ist mit dem Schlauch 3 und dem Temperierungsmittel 12 durch Laserverschweißen (nicht weiter dargestellt) verbunden, wobei der Konnektor 2 aus einem für die verwendete Wellenlänge der Laserstrahlung transparentem PA 12-Material besteht.

## Patentansprüche

1. Baugruppe (1) zum Leiten und Temperieren eines Fluids, bestehend aus mindestens einem Konnektor (2) mit mindestens drei Abgängen/Anschlüssen (5, 6, 7) und einem Schlauch (3), der an einen ersten Abgang/Anschluss (5) des Konnektors (2) angebracht ist, wobei im Hohlraum (11) des Schlauchs (3) mindestens ein Temperierungsmittel (4, 12) angeordnet ist, das Fluid zwischen Temperierungsmittel (4, 12) und Schlauch (3) geleitet wird, wobei das in dem Schlauch (3) angeordnete Temperierungsmittel (4, 12) aus dem Schlauch (3) durch den Konnektor (2) aus einem zweiten Abgang/Anschluss (6) des Konnektors (2), der dem ersten Abgang/Anschluss (5) in etwa gegenüberliegt, herausgeführt ist, ein dritter Abgang/Anschluss (7) des Konnektors (2) mit dem Hohlraum (11) zwischen Temperierungsmittel (4, 12) und Schlauch (3) kommuniziert **dadurch gekennzeichnet, dass**, der Konnektor (2) mit dem Schlauch (3) und dem Temperierungsmittel (4, 12) stoffschlüssig verbunden ist und der Werkstoff des Konnektors (2), des Schlauchs (3) und des Temperierungsmittels (4) aus der Gruppe der Polyamide, Polyphenylensulfide (PPS), Polyphthalamide (PPA), Polyetheretherketone (PEEK) oder Polyetherimide (PEI) ausgewählt ist, so dass die Baugruppe insbesondere geeignet ist zum Leiten und Temperieren einer Harnstoff-Wasser-Lösung.

2. Baugruppe (1) nach Anspruch 1, **dadurch gekennzeichnet, dass** das Temperierungsmittel (4, 12), das in dem Schlauch (3) angeordnet ist, ein elektrischer Heizleiter (12) ist.

3. Baugruppe (1) nach Anspruch 2, **dadurch gekennzeichnet, dass** der elektrische Heizleiter (12) mindestens eine Isolations-/Diffusionssperrschicht (13) aufweist.

4. Baugruppe (1) nach Anspruch 1, **dadurch gekennzeichnet, dass** das Temperierungsmittel (4, 12), das im Schlauch (3) angeordnet ist, ein Schlauch (4) ist.

5. Baugruppe (1) nach Anspruch 4, **dadurch gekennzeichnet, dass** durch den inneren Schlauch (4) ein flüssiges oder gasförmiges Medium zum Temperieren geleitet wird.

6. Baugruppe (1) nach Anspruch 4, **dadurch gekennzeichnet, dass** in dem inneren Schlauch (4) mindestens ein elektrischer Heizleiter (12) angeordnet ist.

7. Baugruppe (1) nach Anspruch 2 oder 6, **dadurch gekennzeichnet, dass** der elektrische Heizleiter (12) aus einer Metalllegierung besteht.

8. Baugruppe (1) nach Anspruch 4 oder 5, **dadurch gekennzeichnet, dass** der innere und/oder der äussere Schlauch (3, 4) mehrschichtig aufgebaut ist.

9. Baugruppe (1) nach Anspruch 8, **dadurch gekennzeichnet, dass** zumindest eine Schicht eines mehrschichtigen Schlauchs (3, 4) eine Armierungsschicht aufweist.

10. Baugruppe (1) nach zumindest einem der vorhergehenden Ansprüche, **dadurch gekennzeichnet, dass** auf dem Schlauch (3, 4) eine Kennzeichnung aussenseitig aufgebracht ist.

11. Baugruppe (1) nach Anspruch 10, **dadurch gekennzeichnet, dass** die Kennzeichnung aufgedruckt und/oder eingeprägt ist.

12. Baugruppe (1) nach zumindest einem der vorhergehenden Ansprüche, **dadurch gekennzeichnet, dass** die Oberfläche des Schlauchs (3, 4) farbig oder mehrfarbig und/oder mit kennzeichnenden Mustern gestaltet ist.

13. Baugruppe (1) nach zumindest einem der vorhergehenden Ansprüche, **dadurch gekennzeichnet, dass** um die Baugruppe (1), zumindest abschnittsweise, eine thermische Schutzhülle angeordnet ist.

14. Baugruppe (1) nach zumindest einem der vorhergehenden Ansprüche, **dadurch gekennzeichnet, dass** der Konnektor (2) mit dem Schlauch (3) und/oder dem Temperierungsmittel (4, 12) durch Schweissen oder Kleben verbunden ist.

15. Baugruppe (1) nach zumindest einem der vorhergehenden Ansprüche, **dadurch gekennzeichnet, dass** der Konnektor (2) mit dem Schlauch (3) und dem Temperierungsmittel (12) durch Laserverschweissen verbunden ist, wobei der Konnektor (2) aus einem für die verwendete Wellenlänge der Laserstrahlung transparenten Material besteht.

16. Verfahren zum Herstellen einer Baugruppe (1) nach zumindest einem der Ansprüche 1 bis 13, **gekennzeichnet durch** folgende Schritte:
a) Erzeugen eines Schlauchs (3) mit mindestens einem im Hohlraum (11) des Schlauchs (3) angeordneten Temperierungsmittel (4, 12),
b) Herstellen eines Überstands des Temperierungsmittels (4, 12) gegenüber zumindest einem Ende des Schlauchs (3),
c) Verschliessen des Hohlraums (11) zwischen Temperierungsmittel (4, 12) und Schlauch (3) am Schlauchende (3a),
d) Einlegen des verschlossenen Schlauchendes (3a) mit dem Temperierungsmittel (4, 12) in eine Spritzgussvorrichtung, so dass das Temperierungsmittel (4, 12) und der Schlauch (3) aus der Kavität des Spritzgusswerkzeugs herausragen,
e) Umspritzen des Übergangs zwischen Temperierungsmittel (4, 12) und verschlossenem Ende des Schlauchs (3),
f) Entnahme der Baugruppe (1) aus dem Spritzgusswerkzeug nach dem Abkühlen und
g) Herstellen einer mit dem Hohlraum (11) zwischen Temperierungsmittel (4, 12) und Schlauch (3) und dem dritten Abgang/Anschluss (7) des Konnektors (2) kommunizierenden Öffnung (8).

17. Verfahren nach Anspruch 16, **dadurch gekennzeichnet, dass** neben dem verschlossenen Schlauchende (3a) des Schlauches (3) und dem Temperierungsmittel (4, 12) mindestens ein weiteres Bauteil (15), insbesondere ein Metallteil für die Verbindung des Konnektors (2) mit anderen Bauteilen, in das Spritzgusswerkzeug eingelegt und mit umspritzt wird.

18. Verfahren nach Anspruch 16 oder 17, **dadurch gekennzeichnet, dass** der Hohlraum (11) zwischen Temperierungsmittel (4, 12) und Schlauch (3) an mindestens einem Schlauchende (3a) durch ein Verschlusselement (9) vor dem Umspritzen verschlossen wird.

19. Verfahren zum Herstellen einer Baugruppe (1) nach Anspruch 16, **dadurch gekennzeichnet, dass** der Verfahrensschritt g), Herstellen einer kommunizierenden Öffnung, beim Umspritzen des Übergangs, Verfahrensschritt e), durch einen Schieber des Spritzgusswerkzeugs ausgeführt wird.

20. Verfahren nach Anspruch 16 oder 17, **dadurch gekennzeichnet, dass** an den Schlauch (3) eine Spitze am Schlauchende (3a) thermisch angeformt wird, die auf dem Temperierungsmittel (4, 12) endet, so dass der Hohlraum (11) zwischen Temperierungsmittel (4, 12) und Schlauch (3) damit verschlossen wird.

## Claims

1. Assembly (1) for carrying and temperature control of a fluid, comprising at least one connector (2) having at least three outlets/connections (5, 6, 7) and a hose (3) which is fitted to a first outlet/connection (5) of the connector (2), with at least one tempering means (4, 12) being arranged in the cavity (11) of the hose (3), the fluid is passed between the tempering means (4, 12) and the hose (3), with the tempering means (4, 12) which is arranged in the hose (3) being passed out of the hose (3) through the connector (2) from a second outlet/connection (6) of the connector (2), which is approximately opposite the first outlet/connection (5), and with a third outlet/connection (7) of the connector (2) communicating with the cavity (11) between the tempering means (4, 12) and the hose (3), **characterized in that** the connector (2) is integrally connected to the hose (3) and to the tempering means (4, 12), and the material of the connector (2), of the hose (3) and of the tempering means (4) being selected from the group of polyamides, polyphenylene sulphides (PPS), polyphthalamides (PPA), polyetheretherketones (PEEK) or polyetherimides (PEI), such that the assembly is particularly suitable for carrying and temperature control of a urea-water solution.

2. Assembly (1) according to Claim 1, **characterized in that** the tempering means (4, 12) which is arranged in the hose (3) is an electrical heating conductor (12).

3. Assembly (1) according to Claim 2, **characterized in that** the electrical heating conductor (12) has at least one insulation/diffusion blocking layer (13).

4. Assembly (1) according to Claim 1, **characterized in that** the tempering means (4, 12) which is arranged in the hose (3) is a hose (4).

5. Assembly (1) according to Claim 4, **characterized in that** a liquid or gaseous medium is passed through the inner hose (4) for temperature control.

6. Assembly (1) according to Claim 4, **characterized in that** at least one electrical heating conductor (12) is arranged in the inner hose (4).

7. Assembly (1) according to Claim 2 or 6, **characterized in that** the electrical heating conductor (12) is composed of a metal alloy.

8. Assembly (1) according to Claim 4 or 5, **characterized in that** the inner and/or the outer hose (3, 4) is formed from a plurality of layers.

9. Assembly (1) according to Claim 8, **characterized in that** at least one layer of a multilayer hose (3, 4) has a reinforcing layer.

10. Assembly (1) according to at least one of the preceding claims, **characterized in that** an identification is applied to the outside of the hose (3, 4).

11. Assembly (1) according to Claim 10, **characterized in that** the identification is printed on and/or stamped in.

12. Assembly (1) according to at least one of the preceding claims, **characterized in that** the surface of the hose (3, 4) is coloured or multicoloured, and/or is provided with identifying patterns.

13. Assembly (1) according to at least one of the preceding claims, **characterized in that** a thermal protective sleeve is arranged at least in places around the assembly (1).

14. Assembly (1) according to at least one of the preceding claims, **characterized in that** the connector (2) is connected to the hose (3) and/or to the tempering means (4, 12) by welding or adhesive bonding.

15. Assembly (1) according to at least one of the preceding claims, **characterized in that** the connector (2) is connected to the hose (3) and to the tempering means (12) by laser welding, with the connector (2) being composed of a material which is transparent for the laser radiation wavelength used.

16. Method for production of an assembly (1) according to at least one of Claims 1 to 13, **characterized by** the following steps:
a) production of a hose (3) having at least one tempering means (4, 12) arranged in the cavity (11) in the hose (3),
b) production of an overhang of the tempering means (4, 12) with respect to at least one end of the hose (3),
c) closure of the cavity (11) between the tempering means (4, 12) and the hose (3) at the hose end (3a),
d) insertion of the closed hose end (3a) with the tempering means (4, 12) into an injection-moulding apparatus, such that the tempering means (4, 12) and the hose (3) project out of the cavity of the injection-moulding tool,
e) extrusion coating of the junction between the tempering means (4, 12) and the closed end of the hose (3),
f) removal of the assembly (1) from the injection-moulding tool after cooling down, and
g) production of an opening (8) which communicates with the cavity (11) between the tempering means (4, 12) and the hose (3) and the third outlet/connection (7) of the connector (2).

17. Method according to Claim 16, **characterized in that,** in addition to the closed hose end (3a) of the hose (3) and the tempering means (4, 12), at least one further component (15), in particular a metal part for the connection of the connector (2) to other components, is inserted into the injection-moulding tool, and is also extrusion coated.

18. Method according to Claim 16 or 17, **characterized in that** the cavity (11) between the tempering means (4, 12) and the hose (3) is closed at at least one hose end (3a) by a closure element (9) before extrusion coating.

19. Method for production of an assembly (1) according to Claim 16, **characterized in that** the method step g), production of a communicating opening is carried out during extrusion-coating of the junction, and method step e) is carried out by a slide of the injection-moulding tool.

20. Method according to Claim 16 or 17, **characterized in that** a point is thermally integrally formed on the hose (3) at the hose end (3a) and ends on the tempering means (4, 12), such that the cavity (11) between the tempering means (4, 12) and the hose (3) is thus closed.

## Revendications

1. Module (1) destiné à conduire et mettre en température un fluide, constitué d'au moins un connecteur (2) ayant au moins trois sorties/raccords (5, 6, 7) et un tuyau (3), qui est monté sur une première sortie/un premier raccord (5) du connecteur (2), au moins un moyen de mise en température (4, 12) étant disposé dans la cavité (11) du tuyau (3), le fluide étant conduit entre le moyen de mise en température (4, 12) et le tuyau (3), le moyen de mise en température (4, 12) disposé dans le tuyau (3) étant ressorti du tuyau (3) par le connecteur (2) hors d'une deuxième sortie/d'un deuxième raccord (6) du connecteur (2), qui est approximativement opposé(e) à la première sortie / au premier raccord (5), une troisième sortie / un troisième raccord (7) du connecteur (2) communiquant avec la cavité (11) entre le moyen de mise en température (4, 12) et le tuyau (3), **caractérisé en ce que** le connecteur (2) est connecté par liaison de matière au tuyau (3) et au moyen de mise en température (4, 12), et le matériau du connecteur (2), du tuyau (3) et du moyen de mise en température (4) est choisi parmi le groupe constitué des polyamides, des polyphénylènesulfides (PPS), des polyphtalamides (PPA), des polyétheréthercétones (PEEK) ou des polyétherimides (PEI), de sorte que le module soit notamment approprié pour conduire et mettre en température une solution d'urée et d'eau.

2. Module (1) selon la revendication 1, **caractérisé en ce que** le moyen de mise en température (4, 12) qui est disposé dans le tuyau (3), est un conducteur électrique chauffant (12).

3. Module (1) selon la revendication 2, **caractérisé en ce que** le conducteur électrique chauffant (12) présente au moins une couche barrière d'isolation/diffusion (13).

4. Module (1) selon la revendication 1, **caractérisé en ce que** le moyen de mise en température (4, 12) qui est disposé dans le tuyau (3) est un tuyau (4).

5. Module (1) selon la revendication 4, **caractérisé en ce qu'**un fluide liquide ou gazeux est conduit en vue de sa mise en température à travers le tuyau interne (4).

6. Module (1) selon la revendication 4, **caractérisé en ce qu'**au moins un conducteur électrique chauffant (12) est disposé dans le tuyau interne (4).

7. Module (1) selon la revendication 2 ou 6, **caractérisé en ce que** le conducteur électrique chauffant (12) se compose d'un alliage de métal.

8. Module (1) selon la revendication 4 ou 5, **caractérisé en ce que** le tuyau interne et/ou externe (3, 4) est réalisé en plusieurs couches.

9. Module (1) selon la revendication 8, **caractérisé en ce qu'**au moins une couche d'un tuyau en plusieurs couches (3, 4) présente une couche de renforcement.

10. Module (1) selon au moins l'une quelconque des revendications précédentes, **caractérisé en ce qu'**une identification est appliquée sur le côté extérieur du tuyau (3, 4).

11. Module (1) selon la revendication 10, **caractérisé en ce que** l'identification est imprimée et/ou marquée.

12. Module (1) selon au moins l'une quelconque des revendications précédentes, **caractérisé en ce que** la surface du tuyau (3, 4) est colorée ou présente plusieurs couleurs, et/ou est configurée avec des motifs d'identification.

13. Module (1) selon au moins l'une quelconque des revendications précédentes, **caractérisé en ce que** l'on dispose autour du module (1), au moins en partie, une enveloppe de protection thermique.

14. Module (1) selon au moins l'une quelconque des revendications précédentes, **caractérisé en ce que** le connecteur (2) est connecté au tuyau (3) et/ou au moyen de mise en température (4, 12) par soudage ou collage.

15. Module (1) selon au moins l'une quelconque des revendications précédentes, **caractérisé en ce que** le connecteur (2) est connecté au tuyau (3) et au moyen de mise en température (12) par soudage au laser, le connecteur (2) se composant d'un matériau transparent à la longueur d'onde utilisée pour le faisceau laser.

16. Procédé pour fabriquer un module (1) selon au moins l'une quelconque des revendications 1 à 13, **caractérisé par** les étapes suivantes :
a) production d'un tuyau (3) ayant au moins un moyen de mise en température (4, 12) disposé dans la cavité (11) du tuyau (3),
b) fabrication d'une projection du moyen de mise en température (4, 12) par rapport à au moins une extrémité du tuyau (3),
c) fermeture de la cavité (11) entre le moyen de mise en température (4, 12) et le tuyau (3) à l'extrémité du tuyau (3a),
d) insertion de l'extrémité du tuyau fermée (3a) avec le moyen de mise en température (4, 12) dans un dispositif de moulage par injection, de sorte que le moyen de mise en température (4, 12) et le tuyau (3) ressortent de la cavité de l'outil de moulage par injection,
e) enrobage par injection de la transition entre le moyen de mise en température (4, 12) et l'extrémité fermée du tuyau (3),
f) enlèvement du module (1) de l'outil de moulage par injection après refroidissement et
g) fabrication d'une ouverture (8) communiquant avec la cavité (11) entre le moyen de mise en température (4, 12) et le tuyau (3) et la troisième sortie / le troisième raccord (7) du connecteur (2).

17. Procédé selon la revendication 16, **caractérisé en ce qu'**en plus de l'extrémité de tuyau fermée (3a) du tuyau (3) et du moyen de mise en température (4, 12), au moins un autre composant (15), en particulier une pièce métallique pour la connexion du connecteur (2) à d'autres composants, est introduit dans l'outil de moulage par injection et est enrobé par injection.

18. Procédé selon la revendication 16 ou 17, **caractérisé en ce que** la cavité (11) entre le moyen de mise en température (4, 12) et le tuyau (3) est fermée au niveau d'au moins une extrémité de tuyau (3a) par un élément de fermeture (9) avant l'enrobage par injection.

19. Procédé pour fabriquer un module (1) selon la revendication 16, **caractérisé en ce que** l'étape de procédé (g), à savoir la fabrication d'une ouverture de communication, lors de l'enrobage par injection de la transition, à savoir l'étape de procédé e), est réalisée par un coulisseau de l'outil de moulage par injection.

20. Procédé selon la revendication 16 ou 17, **caractérisé en ce qu'**une pointe est façonnée thermiquement sur le tuyau (3) à l'extrémité du tuyau (3a), et se termine sur le moyen de mise en température (4, 12), de sorte que la cavité (11) entre le moyen de mise en température (4, 12) et le tuyau (3) soit ainsi fermée.
